# EUROPÄISCHE PATENTSCHRIFT

(11) **EP 0 501 235 B1**
(45) Veröffentlichungstag und Bekanntmachung des Hinweises auf die Patenterteilung: **29.11.1995**
(21) Anmeldenummer: 92102375.0
(22) Anmeldetag: 13.02.1992
(51) Int. Cl.: A61C 8/00

(54) **Zahnwurzelimplantat**
Tooth-root implant
Implant de racine dentaire

(30) Priorität: 20.02.1991 DE 4105165
(43) Veröffentlichungstag der Anmeldung: 02.09.1992
(73) Patentinhaber: ESKA Implants GmbH & Co., 23556 Lübeck (DE)
(72) Erfinder: Moser, Heinz, W-6227 Oestrich-Winkel (DE)
(74) Vertreter: Fuchs Mehler Weiss

(56) Entgegenhaltungen:
- EP-A- 0 178 448
- DE-A- 3 738 045
- GB-A- 2 010 095

## Beschreibung

Die Erfindung betrifft ein Zahnwurzelimplantat gemäß dem Oberbegriff des Anspruchs 1.

Bei einem notwendig werdenden Eingriff zum Einsetzen eines solchen Implantates in der Alveole des Kieferknochens wird zunächst der betroffene Zahn samt Wurzel entfernt. Nach erfolgter Reinigung und ggf. Ausfräsung des knöchernen Zahnfaches kann der Schaft eines bekannten Zahnwurzelimplantetes (DE 35 31 389 A1) in das Zahnfach gesetzt werden, in den aufgrund der darin vorgesehenen Öffnungen im Laufe der Zeit der Knochen einwachsen soll, so daß das Implantat dauerhaft in der Alveole fixiert werden soll. Kommt es dabei trotz höchster Sorgfalt in hygienischer Hinsicht zu einer Entzündung im Bereich des betroffenen Zahnfaches, bleibt in der Regel nur ein Revisionseingriff übrig. Darüberhinaus wurde festgestellt, daß die knöcherne Einlagerung des bekannten Implantates nicht befriedigend stabil ist. Der Grund hierfür dürfte in Mikroscherbewegungen des Implantatschaftes gegenüber dem Knochen liegen bei Beißbewegungen, da diese mehr oder weniger unbeeinflußt vom Implantatkopf weiter in den Schaft geleitet werden.

Ein gattungsgemäßes Zahnwurzelimplantat ist bekannt geworden aus der DE 3738045 A1. Der Schaft dieses Implantates besteht aus einem Metallmaschenwerk mit einer Maschenweite von 30 bis 1000 »m. Diese Maschenweite ist so dimensioniert, daß Knochenmaterial in den Implantatschaft einwachsen und das Implantat dauerhaft fixieren soll. Dieses Implantat weist die gleichen Nachteile wie jenes gemäß der erstgenannten Druckschrift auf.

Vor diesem Hintergrund ist es die Aufgabe der vorliegenden Erfindung, ein Zahnwurzelimplantat anzugeben, bei dem die vorerwähnten Probleme nicht auftreten, also für eine hinreichend stabile Verankerung im Knochenbett gesorgt ist bei gleichzeitig gegebener Möglichkeit, evtl. auftretende Entzündungsherde zu behandeln, ohne notwendigerweise einen Revisionseingriff durchführen zu müssen.

Gelöst wird diese Aufgabe durch ein Zahnwurzelimplantat welches gemäß den kennzeichnenden Merkmalen des Anspruchs 1 ausgebildet ist. Vorteilhafte Weiterbildungen ergeben sich aus den Unteransprüchen.

Demgemäß durchgreift den Kopf des Implantats eine bis zu dem hohlen Schaft reichende Längsdurchbohrung. Ziel der beschriebenen Ausbildung des Schaftes ist nicht die Einlagerung von Knochenmaterial zur Fixierung des Implantats, die im übrigen - wie an Hand der bekannten Implantate weiter oben beschrieben - ohnehin nicht befriedigend wäre auf Grund der Mikroscherbewegungen des Schaftes in dem knöchernen Zahnfach. Vielmehr ist die Ausbildung des Schaftes als offenes Netzwerk im Zusammenhang mit der Durchbohrung des Kopfes zu sehen:
Nach Entfernung der Suprastruktur kann eine Kanüle in diese Bohrung gesetzt werden und ein Antiseptikum in das Knochenlager durch das offene maschenförmige Netzwerk des Schaftes geleitet werden, so daß einem möglichen Infektionsherd entgegengewirkt werden kann.

Wenn also der Schaft - wie ausgeführt - nichts zur knöchernden Fixation des Implantates beiträgt, stellt sich freilich die Frage, wie das Implantat dauerhaft in der Alveole befestigt wird. Erfindungsgemäß ist hierzu vorgesehen, daß der Kopf in Bezug auf die Schaftachse schräg verlaufende, die Außenkonturen des Schaftes überragende Anlageflächen aufweist, die sich gegen das knöcherne Bett legen und die bei Kaubewegungen auftretende Belastungen direkt am Eingang des Zahnfaches in die Alveole einleiten. Die Anlageflächen des Kopfes weisen eine offenzellige Struktur auf, durch die hindurch knöchernes Material zur Dauerfixation wachsen kann. Dabei wirken die Belastungskräfte auf Grund von Kaubewegungen wachstumsfördernd für das Knochenmaterial, da diese direkt in den Knochen eingeleitet werden und diesen dadurch in bekannter Weise zur Zellbildung anregen.

Die schrägen Anlageflächen sind gemäß eines ersten Vorschlages die Außenflächen des als Trapez ausgebildeten Kopfes. In diesem Falle kommt der Kopf also wie ein Pfropf in der Öffnung des Knochenlagers zu liegen und füllt einen vorhandenen Defekt im Knochen aus.

Gemäß eines weiteren Vorschlags ist der Kopf pilzförmig ausgebildet. Die schrägen Anlageflächen sind dann gebildet aus den Flächen an der Pilzhutunterseite.

Die Wahl der einen oder anderen Kopfform des Implantates hängt ab vom jeweiligen Zustand des Kieferknochens.

Die Offenzelligkeit der Anlageflächen des Kopfes kann durch eine retikulierte Filterstruktur gegeben sein, wie sie beispielsweise durch das deutsche Patent P 39 17 033 hergestellt werden kann. Diese Struktur wird bevorzugt bei weicherem Knochenmaterial der Alveole. Die Offenzelligkeit der Anlageflächen kann alternativ gegeben sein durch ein offenes maschenförmiges Netzwerk, wie es schon bei der Ausbildung des Schaftes des Implantates vorgesehen ist. Diese Ausführungsform kann vorteilhaft bei stabilem Knochenmaterial der Alveole eingesetzt werden.

Die Anlageflächen des Kopfes sind vorteilhaft so geneigt, daß sie in etwa senkrecht auf der bevorzugten Wachstumsrichtung des Knochens stehen, damit die Fixierung des Implantats möglichst rasch erfolgt.

Bei der Ausbildung des Kopfes als Trapez bedeutet dies eine Neigung der Anlageflächen um 30 bis 50° zur Hauptachse des Implantats zu dessen Oberende hin. Bei der pilzförmigen Ausbildung des Kopfes bedeutet dies eine Neigung der Anlageflächen um 30 bis 50° zur Hauptachse des Implantats zu dessen Unterende hin.

Die den Kopf des Implantates durchgreifende Bohrung ist vorteilhaft eine sich in Richtung auf den Schaft konisch verjüngende Bohrung. Damit dient diese Bohrung nicht nur der Einleitung einer antiseptischen Flüssigkeiten, sondern kann gleichzeitig die Lagerung der Suprastruktur übernehmen, die in diesem Falle mit einem konischen Zapfen versehen ist, so daß zwischen dem Implantat und der Suprastruktur eine konische Verklemmung in an sich bekannter Art und Weise hergestellt werden kann.

Sollte sich trotz aller Maßnahmen doch eine Infektion im Zahnbett festsetzen, wird unter Umständen ein Revisionseingriff nötig. Um auch diesem Fall Rechnung tragen zu können, ist gemäß einer vorteilhaften Weiterbildung am Unterende des Schaftes eine Gewindebohrung vorgesehen, in die ein Extraktionsgewinde eingeschraubt werden kann. Dieses wird durch die Durchbohrung im Kopf des Implantates hindurchgeführt und mit der erwähnten Gewindebohrung verschraubt. Nach Ansatz eines geeigneten Werkzeuges an das Extraktionsgewinde und Abstützen des Werkzeugs am Kieferknochen kann das Implantat unter Kraftanwendung aus dem Zahnbett herausgehebelt werden.

Die Erfindung wird anhand einiger Ausführungsbeispiele näher erläutert. Hierbei zeigt:
- Figur 1:: Eine Aufsicht (a), eine Seitenansicht (b) und eine Schnittansicht (c) einer ersten Ausführungsform des Zahnwurzelimplantats,
- Figur 2:: die entsprechenden Ansichten einer zweiten Ausführungsform,
- Figur 3:: die entsprechenden Ansichten einer dritten Ausführungsform, und
- Figur 4:: die entsprechenden Ansichten einer vierten Ausführungsform.

Nachfolgend sind entsprechende Teile mit denselben Bezugszeichen versehen.

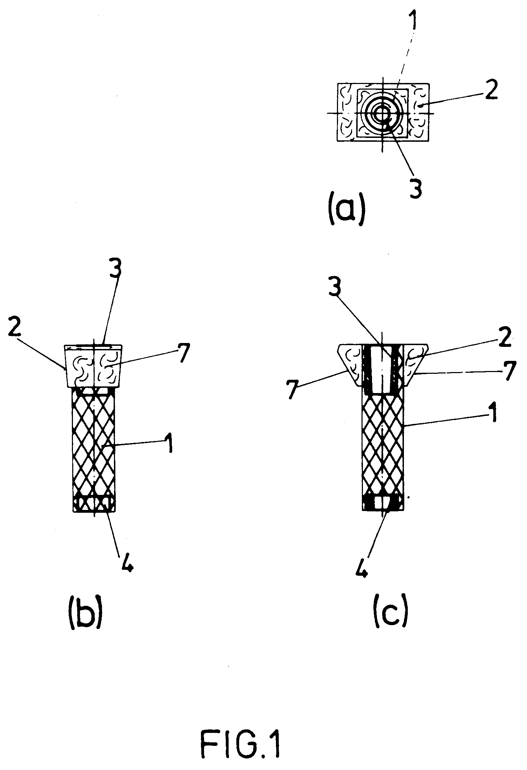

Das Zahnwurzelimplantat gemäß Figur 1 weist einen metallischen Schaft 1 und ein einstückig mit diesem ausgebildeten Kopf 2 auf. Der Kopf 2 wird durchsetzt durch eine sich zum Unterende des Schaftes 1 verjüngende Bohrung 3, die im Bedarfsfalle zum Einleiten einer antibakteriellen Lösung sowie zur Aufnahme einer mit einem konischen Zapfen versehenen Suprastruktur dient, die dann in der Bohrung 3 mittels einer konischen Verklemmung gehalten wird.

In dem gezeigten Ausführungsbeispiel ist der Kopf 2 trapezförmig ausgebildet, wobei die Schenkel des Trapezes Anlageflächen 7 ausbilden, die an dem Knochen in dem für die Implantation vorgesehenen Zahnbett zu liegen kommen. Die Anlageflächen 7 sind so geneigt, daß sie in etwa senkrecht auf der Hauptwachstumsrichtung des Knochenmaterials zu liegen kommen.

Bei diesem ersten Ausführungsbeispiel besteht der ganze Kopf 2 aus einer Struktur eines retikulierten Filters, in dessen offene Zellen Knochenmaterial infiltrieren kann.

Der Schaft 1 besteht aus einem offenen maschenförmigen Netzwerk. Im Bedarfsfall durch die Bohrung 3 eingeleitete Desinfektionsflüssigkeit kann diese ohne Schwierigkeit durch die Maschen des Netzwerkes des Schaftes 1 an den benachbarten Knochen treten, um dort eventuelle Entzündungsherde auszuschalten.

Am unteren Ende des Schaftes 1 ist eine Gewindebohrung 4 vorgesehen, in die ein nicht dargestelltes Extraktionsgewinde schraubbar ist. Dieses wird von oben durch die Borhung 3 in Kopf 2 durch den Schaft 1 bis zur Gewindebohrung 4 geführt und mit dieser verschraubt. Mittels eines geeigneten Werkzeugs, das sich am Kieferknochen abstützt, wird dann im Bedarfsfall das Implantat an dem Extraktionsgewinde aus dem Zahnbett gezogen.

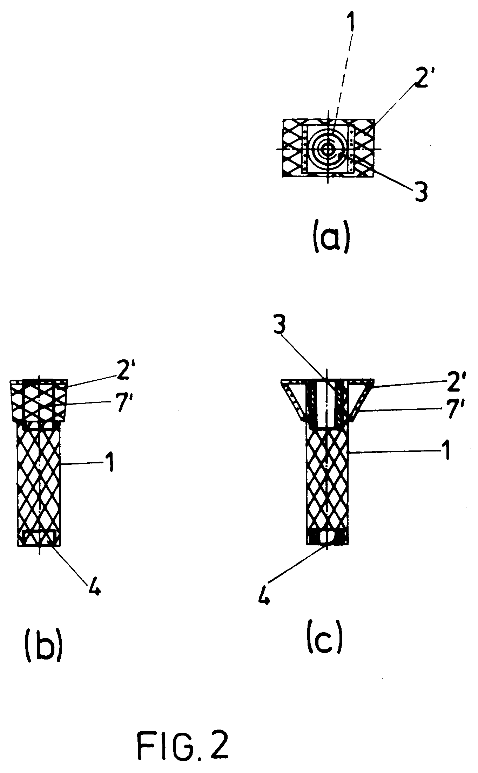

Figur 2 zeigt eine abgewandelte Ausführungsform. Die Abwandlung gegenüber jener gemäß Figur 2 besteht darin, daß der Kopf 2' aus einem offenen maschenförmigen Netzwerk besteht. Diese Ausführungsform kann insbesondere bei stabilem Knochenmaterial der Alveole zum Einsatz kommen. Auch hierbei schließen die Anlageflächen 7' einen solchen Winkel ein, daß sie nach dem Einsetzen in die Alveole in etwa senkrecht auf der Hauptwachstumsrichtung des Knochenmaterials stehen.

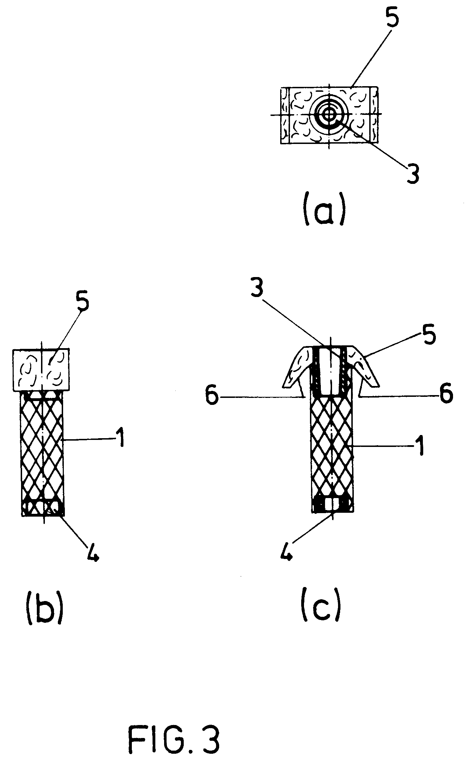

Figur 3 zeigt eine weitere Ausführungsform des Zahnwurzelimplantats, bei dem der Kopf 5 eine pilzförmige Gestalt aufweist. Die Anlageflächen 6 sind hierbei durch die Unterseiten des Pilzhutes gebildet. Diese sind so geneigt, daß sie wiederum in etwa senkrecht auf der Hauptwachstumsrichtung des Knochenmaterials zu liegen kommen. Der pilzförmige Hut 5 weist in diesem Ausführungsbeispiel wiederum eine durchgängige Struktur eines retikulierten Filters auf.

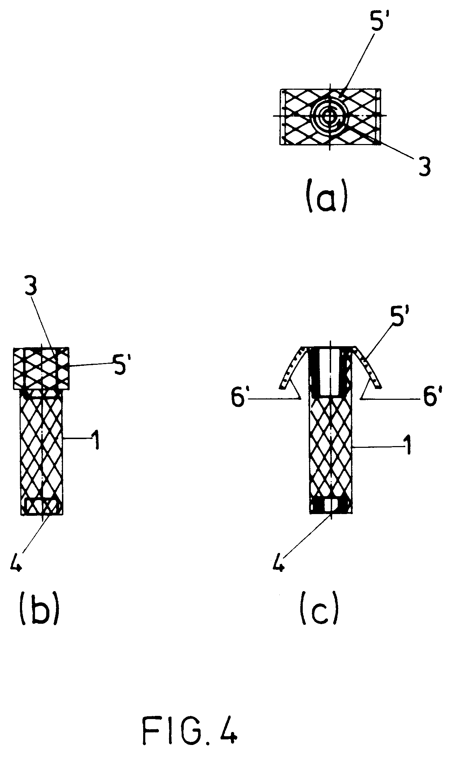

Figur 4 schließlich zeigt ein weiteres Ausführungsbeispiel, bei dem der Kopf 5' wiederum pilzförmig ausgebildet ist. Auch hierbei sind die Anlageflächen 6' wiederum gebildet aus den Pilzhut-Unterseiten. Auch hierbei sind diese so geneigt, daß sie senkrecht auf der Hauptwachstumsrichtung des Knochenmaterials zu liegen kommen.

Allen dargestellten Ausführungsbeispielen des Zahnwurzelimplantats ist gemeinsam, daß ohne Revisionseingriff eine Behandlung von möglicherweise auftretenden Infektionen möglich ist, und daß eine sichere Verankerung mit dem Kieferknochen gewährleistet ist.

## Patentansprüche

1. Zahnwurzelimplantat, bestehend aus einem in die Alveole einsetzbaren metallischen Schaft (1) und einem einstückig mit diesem ausgebildeten Kopf (2, 2', 5, 5'), mit dem lösbar eine Suprastruktur verbindbar ist, bei dem der Schaft (1) hohl ist und aus einem offenen maschenförmigen Netzwerk besteht, gekennzeichnet durch eine Längsdurchgangsbohrung (3) im Kopf (2, 2', 5, 5'), die bis hin zum hohlen Schaft (1) reicht, und in bezug auf den Schaft (1) schräg zulaufende, die Außenkonturen des Schaftes überragende, aus offenzelligem Material bestehende und an der Alveole zu liegen kommende Anlageflächen (6, 6', 7, 7') des Kopfes.

2. Zahnwurzelimplantat nach Anspruch 1, bei dem die schräg zulaufenden Anlageflächen (7, 7') die Schenkel eines als Trapez ausgebildeten Kopfes (2, 2') sind.

3. Zahnwurzelimplantat nach Anspruch 2, bei dem die Schenkel des trapezförmigen Kopfes (2, 2') einen Winkel zur Hauptachse im Bereich von 30 bis 50° zum Kopfende hin einschließen.

4. Zahnwurzelimplantat nach Anspruch 1, bei dem die schräg zulaufenden Anlageflächen (6, 6') die Unterseite des pilzförmig ausgebildeten Kopfes (5, 5') sind.

5. Zahnwurzelimplantat nach Anspruch 4, bei dem die Anlageflächen (6, 6') einen Winkel zur Hauptachse im Bereich von 30 bis 50° zum Schaftende hin einschließen.

6. Zahnwurzelimplantat nach einem der Ansprüche 1 bis 5, bei dem die Anlageflächen (6, 7) die Struktur eines retikulierten Filters aufweisen.

7. Zahnwurzelimplantat nach einem der Ansprüche 1 bis 5, bei dem die Anlageflächen (6', 7') die Struktur eines offenen maschenförmigen Netzwerkes aufweisen.

8. Zahnwurzelimplantat nach einem der Ansprüche 1 bis 7, bei dem die im Kopf (2, 2', 5, 5') vorgesehene Bohrung (3) eine sich zum Schaftende hin verjüngende Bohrung ist.

9. Zahnwurzelimplantat nach einem der Ansprüche 1 bis 8, bei dem am Unterende des Schaftes (1) eine Gewindebohrung (4) vorgesehen ist, in die ein Extraktionsgewinde schraubbar ist.

## Claims

1. Tooth root implant consisting of a metallic shaft (1) which can be inserted in the alveolus and a head (2, 2', 5, 5') designed to be integral with the latter and to which a suprastructure can be releasably connected, in which shaft (1) is hollow and consists of an open mesh-like network, characterised by a longitudinal through-bore (3) in head (2, 2', 5, 5') which extends as far as the hollow shaft (1), and contact surfaces (6, 6', 7, 7') of the head consisting of open-pore material and coming to rest against the alveolus, projecting beyond the outer contours of the shaft and tapering at an angle relative to shaft (1).

2. Tooth root implant according to claim 1, in which the inclined tapering contact surfaces (7, 7') are the limbs of a head (2, 2') designed as a trapezium.

3. Tooth root implant according to claim 2, in which the limbs of the trapezium-shaped head (2, 2') enclose an angle to the main axis in the region of 30 to 50° towards the head end.

4. Tooth root implant according to claim 1, in which the inclined tapering contact surfaces (6, 6') are the lower side of a head (5, 5') designed like a mushroom.

5. Tooth root implant according to claim 4, in which the contact surfaces (6, 6') enclose an angle to the main axis in the region of 30 to 50° towards the shaft end.

6. Tooth root implant according to one of claims 1 to 5, in which contact surfaces (6, 7) have the structure of a reticulated filter.

7. Tooth root implant according to one of claims 1 to 5, in which contact surfaces (6', 7') have the structure of an open mesh-like network.

8. Tooth root implant according to one of claims 1 to 7, in which the bore (3) provided in head (2, 2', 5, 5') is a bore tapering towards the shaft end.

9. Tooth root implant according to one of claims 1 to 8, in which a threaded bore (4), into which an extraction thread can be screwed, is provided on the lower end of shaft (1).

## Revendications

1. Implant de racine de dent, constitué d'un corps métallique (1) pouvant être mis en place dans l'alvéole, et d'une tête (2, 2', 5, 5') solidaire de ce corps et à laquelle une superstructure est assemblée de manière amovible, le corps (1) étant creux et constitué d'un réseau ouvert en forme de mailles, **caractérisé** par un perçage débouchant longitudinal (3) dans la tête (2, 2', 5, 5'), perçage qui s'étend jusqu'au corps creux (1), et par des faces d'application (6, 6', 7, 7') de la tête qui dépassent des contours extérieurs du corps, s'étendent en oblique vers le corps (1), sont constituées d'un matériau à cellules ouvertes et viennent en application contre l'alvéole.

2. Implant de racine de dent selon la revendication 1, dans lequel les faces d'application (7, 7') s'étendant en oblique constituent les côtés d'une tête (2, 2') réalisée en forme de trapèze.

3. Implant de racine de dent selon la revendication 2, dans lequel les côtés de la tête en forme de trapèze (2, 2') forment un angle de 30 à 50° par rapport à l'axe principal en direction opposée au corps.

4. Implant de racine de dent selon la revendication 1, dans lequel les faces d'application (6, 6') s'étendant en oblique constituent les faces inférieures de la tête (5, 5') réalisée en forme de champignon.

5. Implant de racine de dent selon la revendication 4, dans lequel les faces d'application (6, 6') forment un angle de 30 à 50° par rapport à l'axe principal en direction de l'extrémité du corps.

6. Implant de racine de dent selon l'une quelconque des revendications 1 à 5, dans lequel les faces d'application (6, 7) présentent une structure de filtre réticulé.

7. Implant de racine de dent selon l'une quelconque des revendications 1 à 5, dans lequel les faces d'application (6', 7') présentent une structure de réseau ouvert en forme de mailles.

8. Implant de racine de dent selon l'une quelconque des revendications 1 à 7, dans lequel le perçage (3) prévu dans la tête (2, 2', 5, 5') est un perçage qui se rétrécit en direction de l'extrémité du corps.

9. Implant de racine de dent selon l'une quelconque des revendications 1 à 8, dans lequel un perçage fileté (4), dans lequel peut être vissé un filetage d'extraction, est prévu à l'extrémité inférieure du corps (1).
